# EUROPEAN PATENT APPLICATION

(11) **EP 4 447 171 A1**
(43) Date of publication of application: **16.10.2024**
(21) Application number: 24157235.3
(22) Date of filing: 13.02.2024
(51) Int. Cl.: H01M 8/0258, H01M 8/026, H01M 8/0265, H01M 8/04089, H01M 8/04746, H01M 8/12

(54) **FUEL CELL SYSTEM WITH ANODE EXHAUST REFORMATION AND METHOD OF OPERATING THE SAME**

(30) Priority: 18.02.2023 IN 202341011181; 25.04.2023 US 202363498113 P
(71) Applicant: Bloom Energy Corporation, San Jose, CA 95134 (US)
(72) Inventor: WEINGAERTNER, David, San Jose, 95134 (US); RAMAN, Annamalai, San Jose, 95134 (US)
(74) Representative: Wichmann, Hendrik

(57) **Abstract**

A fuel cell system includes a stack of fuel cells, an anode recuperator configured to heat fuel provided to the stack using anode exhaust generated by the stack, an anode exhaust distribution structure fluidly connecting a fuel outlet the stack to an anode exhaust inlet of the anode recuperator, and a reformation catalyst disposed in the anode exhaust distribution structure.

## Description

### FIELD

The present disclosure is directed to fuel cell systems and components, such as catalyst coated anode exhaust passages and interconnects including features configured to increase fuel utilization and anode exhaust reformation.

### BACKGROUND

A typical solid oxide fuel cell stack includes multiple fuel cells separated by metallic interconnects (IC) which provide both electrical connection between adjacent cells in the stack and channels for delivery and removal of fuel and oxidant. The metallic interconnects are commonly composed of a Cr-based alloys such as CrFe alloys, which have a composition of 95wt% Cr - 5wt% Fe or Cr-Fe-Y having a 94wt% Cr - 5wt% Fe - 1wt%Y composition. The CrFe and CrFeY alloys retain their strength and are dimensionally stable at typical solid oxide fuel cell (SOFC) operating conditions, e.g., 700-900 °C in both air and wet fuel atmospheres.

### SUMMARY

According to one embodiment, a fuel cell system includes a stack of fuel cells, an anode recuperator configured to heat fuel provided to the stack using anode exhaust generated by the stack, an anode exhaust distribution structure fluidly connecting a fuel outlet the stack to an anode exhaust inlet of the anode recuperator, and a reformation catalyst disposed in the anode exhaust distribution structure.

According to another embodiment, a method of operating a fuel cell system comprises providing anode exhaust generated by a stack of fuel cells to an anode exhaust distribution structure comprising a reformation catalyst, providing anode exhaust output from the anode exhaust distribution structure to an anode recuperator, and providing a fuel inlet stream to the anode recuperator, wherein the anode exhaust heats the fuel inlet stream in the anode recuperator.

According to another embodiment, an interconnect for a fuel cell stack includes fuel ribs disposed on a first side of the interconnect and a least partially defining fuel channels, at least one flow modulator disposed in the fuel channels and configured to disrupt a fuel boundary layer at a surface of the fuel channels, and air ribs disposed on an opposing second side of the interconnect and at least partially defining air channels.

According to another embodiment, a method of operating a fuel cell stack containing the above interconnect includes flowing a fuel through the fuel channels, such that the at least one flow modulator which disrupts the fuel boundary layer at the surface of the fuel channels, and flowing air through the air channels.

### BRIEF DESCRIPTION OF THE DRAWINGS

FIG. 1A is a perspective view of a SOFC stack, according to various embodiments of the present disclosure.
FIG. 1B is a cross-sectional view of a portion of the stack of FIG. 1A.
FIG. 2A is a top view of an air side of a comparative interconnect, according to comparative embodiments of the present disclosure.
FIG. 2B is a top view of a fuel side of the comparative interconnect of FIG. 2A.
FIG. 3A is a top view of the fuel side of an interconnect, according to an embodiment of the present disclosure. FIGS. 3B and 3C are side cross-sectional views taken along plane B-B' in FIG. 3A, including alternative flow modulator configurations that may be included in the interconnect FIG. 3A. FIG. 3D is a top view of the fuel side of an alternative interconnect, according to an alternative embodiment of the present disclosure.
FIGS. 4-7 are top view of the fuel sides of interconnects according to various embodiments of the present disclosure.
FIG. 8 is a schematic of a solid oxide fuel cell (SOFC) system, according to a first embodiment of the present disclosure.
FIG. 9 is a schematic of a SOFC system, according to a second embodiment of the present disclosure.
FIG. 10 is a schematic view of a SOFC system, according to a third embodiment of the present disclosure.
FIGS. 11 and 12A are cross-sectional views of portions of a central column that may be included in the SOFC systems of FIGS. 8, 9 and/or 10.
FIG. 12B is a perspective view of a portion of an anode exhaust distribution structure located below the central column of FIG. 12A.

### DETAILED DESCRIPTION

The various embodiments will be described in detail with reference to the accompanying drawings. The drawings are not necessarily to scale and are intended to illustrate various features of the invention. Wherever possible, the same reference numbers will be used throughout the drawings to refer to the same or like parts. References made to particular examples and implementations are for illustrative purposes and are not intended to limit the scope of the invention or the claims.

Ranges can be expressed herein as from "about" one particular value, and/or to "about" another particular value. When such a range is expressed, examples include from the one particular value and/or to the other particular value. Similarly, when values are expressed as approximations, by use of the antecedent "about" or "substantially" it will be understood that the particular value forms another aspect. In some embodiments, a value of "about X" may include values of +/- 1% X. It will be further understood that the endpoints of each of the ranges are significant both in relation to the other endpoint, and independently of the other endpoint.

In a high temperature fuel cell system, such as a solid oxide fuel cell (SOFC) system, an oxidizing flow is passed through the cathode side of the fuel cell while a fuel flow is passed through the anode side of the fuel cell. The oxidizing flow is typically air, while the fuel flow can be a hydrogen (Hz) or a hydrocarbon fuel, such as methane, natural gas, propane, ethanol, methanol, or ammonia. The fuel cell, operating at a typical temperature between 750°C and 950°C, enables the transport of negatively charged oxygen ions from the cathode flow stream to the anode flow stream, where the ion combines with either free hydrogen or hydrogen in a hydrocarbon molecule to form water vapor and/or with carbon monoxide to form carbon dioxide. The excess electrons from the negatively charged ion are routed back to the cathode side of the fuel cell through an electrical circuit completed between anode and cathode, resulting in an electrical current flow through the circuit.

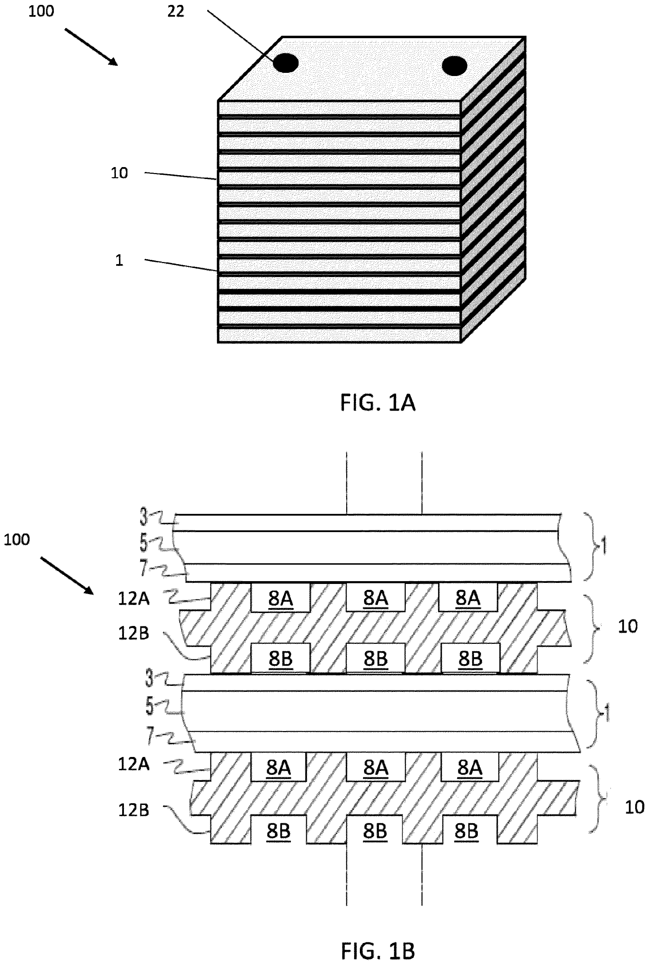

FIG. 1A is a perspective view of a solid oxide fuel cell (SOFC) stack 100, and FIG. 1B is a sectional view of a portion of the stack 100, according to various embodiments of the present disclosure. Referring to FIGS. 1A and 1B, the stack 100 includes fuel cells 1 separated by interconnects 10. Referring to FIG. 1B, each fuel cell 1 comprises a cathode electrode 3, a solid oxide electrolyte 5, and an anode electrode 7.

Various materials may be used for the cathode electrode 3, electrolyte 5, and anode electrode 7. For example, the anode electrode 3 may comprise a cermet comprising a nickel containing phase and a ceramic phase. The nickel containing phase may consist entirely of nickel in a reduced state. This phase may form nickel oxide when it is in an oxidized state. Thus, the anode electrode 7 is preferably annealed in a reducing atmosphere prior to operation to reduce the nickel oxide to nickel. The nickel containing phase may include other metals in additional to nickel and/or nickel alloys. The ceramic phase may comprise a stabilized zirconia, such as yttria and/or scandia stabilized zirconia and/or a doped ceria, such as gadolinia, yttria and/or samaria doped ceria.

The electrolyte may comprise a stabilized zirconia, such as scandia stabilized zirconia (SSZ) or yttria stabilized zirconia (YSZ). Alternatively, the electrolyte may comprise another ionically conductive material, such as a doped ceria.

The cathode electrode 3 may comprise an electrically conductive material, such as an electrically conductive perovskite material, such as lanthanum strontium manganite (LSM). Other conductive perovskites, such as LSCo, etc., or metals, such as Pt, may also be used. The cathode electrode 3 may also contain a ceramic phase similar to the anode electrode 7. The electrodes and the electrolyte may each comprise one or more sublayers of one or more of the above-described materials.

Fuel cell stacks are frequently built from a multiplicity of SOFC's 1 in the form of planar elements, tubes, or other geometries. Although the fuel cell stack in FIG. 1A is vertically oriented, fuel cell stacks may be oriented horizontally or in any other direction. Fuel and air may be provided to the electrochemically active surface, which can be large. For example, fuel may be provided through fuel conduits 22 (e.g., fuel riser openings) formed in each interconnect 10.

Each interconnect 10 electrically connects adjacent fuel cells 1 in the stack 100. In particular, an interconnect 10 may electrically connect the anode electrode 7 of one fuel cell 1 to the cathode electrode 3 of an adjacent fuel cell 1. FIG. 1B shows that the lower fuel cell 1 is located between two interconnects 10. An optional Ni mesh may be used to electrically connect the interconnect 10 to the anode electrode 7 of an adjacent fuel cell 1.

Each interconnect 10 includes fuel ribs 12A that at least partially define fuel channels 8A and air ribs 12B that at least partially define oxidant (e.g., air) channels 8B. The interconnect 10 may operate as a gas-fuel separator that separates a fuel, such as a hydrocarbon fuel, flowing to the fuel electrode (i.e., anode 7) of one cell in the stack from oxidant, such as air, flowing to the air electrode (i.e., cathode 3) of an adjacent cell in the stack. At either end of the stack 100, there may be an air end plate or fuel end plate (not shown) for providing air or fuel, respectively, to the end electrode.

Each interconnect 10 may be made of or may contain electrically conductive material, such as a metal alloy (e.g., chromium-iron alloy) which has a similar coefficient of thermal expansion to that of the solid oxide electrolyte in the cells (e.g., a difference of 0-10%). For example, the interconnects 10 may comprise a metal (e.g., a chromium-iron alloy, such as 4-6 weight percent iron, optionally 1 or less weight percent yttrium and balance chromium alloy) and may electrically connect the anode or fuel-side of one fuel cell 1 to the cathode or air side of an adjacent fuel cell 1. An electrically conductive contact layer, such as a nickel contact layer, may be provided between anode electrodes 7 and each interconnect 10. Another optional electrically conductive contact layer, such as a lanthanum strontium manganite and/or a manganese cobalt oxide spinel layer, may be provided between the cathode electrodes 3 and each interconnect 10.

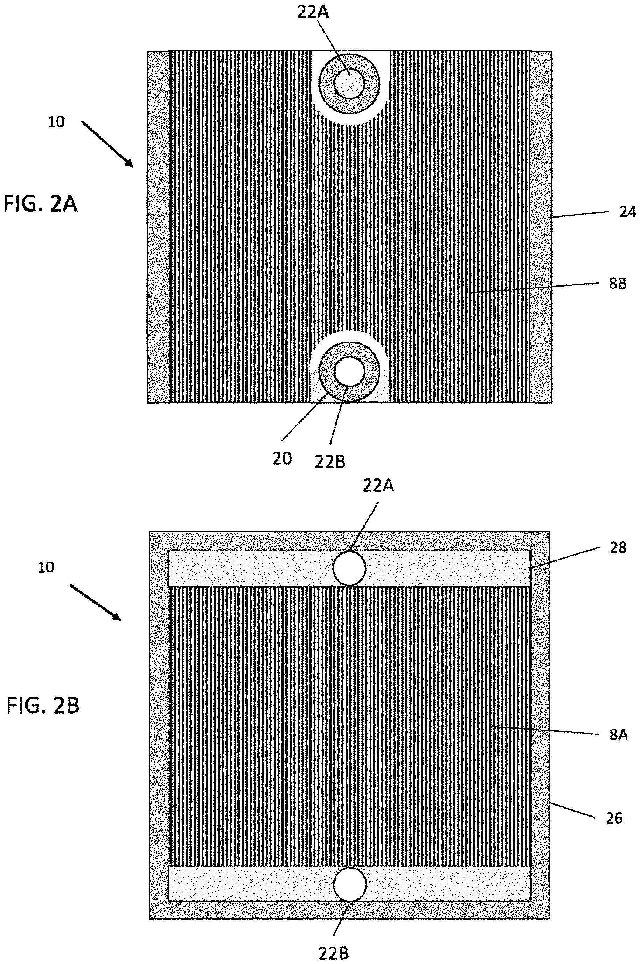

FIG. 2A is a top view of the air side of the interconnect 10, and FIG. 2B is a top view of a fuel side of the interconnect 10, according to comparative embodiments. Referring to FIGS. 1B and 2A, the air side includes the air channels 8B. Air flows through the air channels 8B to a cathode electrode 3 of an adjacent fuel cell 1. Ring seals 20 may surround fuel holes 22A of the interconnect 10, to prevent fuel from contacting the cathode electrode. Peripheral strip-shaped seals 24 are located on peripheral portions of the air side of the interconnect 10. The seals 20, 24 may be formed of a glass or glass-ceramic material. The peripheral portions may be an elevated plateau which does not include ribs or channels. The surface of the peripheral regions may be coplanar with tops of the ribs 12B.

Referring to FIGS. 1B and 2B, the fuel side of the comparative interconnect 10 may include the fuel channels 8A and fuel manifolds 28. Fuel flows from one of the fuel holes 22A (e.g., inlet hole that forms part of the fuel inlet riser), into the adjacent manifold 28, through the fuel channels 8A, and to an anode 7 of an adjacent fuel cell 1. Excess fuel may flow into the other fuel manifold 28 and then into the outlet fuel hole 22B. A frame-shaped seal 26 is disposed on a peripheral region of the fuel side of the interconnect 10. The peripheral region may be an elevated plateau which does not include ribs or channels. The surface of the peripheral region may be coplanar with tops of the ribs 12.

As shown in FIGS. 2A and 2B, one of the fuel holes 22A, 22B delivers fuel to each cell in the stack and a corresponding manifold 28 distributes fuel to each fuel channel 8A. Fuel flows straight down each fuel channel 8A, and unreacted fuel is collected in the other manifold 28 and exits the stack via the other fuel hole 28A, 28B. This flow channel geometry is optimized for operation on natural gas with partial external pre-reforming.

Referring to FIGS. 1A-2B, when the fuel cell stack 100 including the comparative interconnects 10 is operated using natural gas as a fuel, the stack 100 has a high fuel utilization. In particular, one of ordinary skill in the art would expect that anode exhaust output from the stack 100 would comprise CO, COz, H₂, HzO, N₂, and a very small amount of CH₄ (e.g., about 1 ppm or less).

However, the anode exhaust leaving the comparative stack 100 includes over 500 ppm of hydrocarbon compounds, such as methane, ethane, propane and/or butane when natural gas is used as fuel. It is believed that at least 1% of the hydrocarbons provided to the stack 100 does not react (i.e., is not converted to CO, COz, H₂ and/or H₂O) at the anode 3 surface of the fuel cells 1, and is output in the anode exhaust. When other fuels, such as ammonia, are provided to the comparative stack, similar amount of the other unreacted fuel is output in the anode exhaust.

Without wishing to be bound by a particular theory, it is believed that a boundary layer may form at the surface of the comparative interconnects 10, such as at the bottom of the fuel channels 8A. The boundary layer may reduce fuel diffusion, such that a portion of the fuel flows in the boundary layer along the surface of the fuel channels 8A of the comparative interconnects 10 without contacting the anode 3 surface of an adjacent fuel cell 1 in the comparative stack 100. It is believed that the fuel in the boundary layer does not participate in electrochemical fuel cell 1 reaction and thus does not contribute to the powder generation of the comparative stack 100. This reduces the fuel utilization of the comparative stack 100. Furthermore, if the anode exhaust is used in an additional process, such as recovery of COz from the anode exhaust stream, then the unreacted hydrocarbon compounds in the anode exhaust may contaminate the output of the additional process. For example, the hydrocarbon compounds may contaminate a separated COz product stream, unless further complicated and/or costly processes are performed to remove such contaminants.

According to various embodiments of the present disclosure, interconnects are configured to increase overall percentage of reformed fuel at the anode surface, and thereby potentially allow higher per-pass fuel utilization. In particular, embodiment interconnects include features configured to increase fuel diffusion to adjacent fuel cell 1 anode 3 surfaces and thereby increase fuel utilization and fuel cell system efficiency.

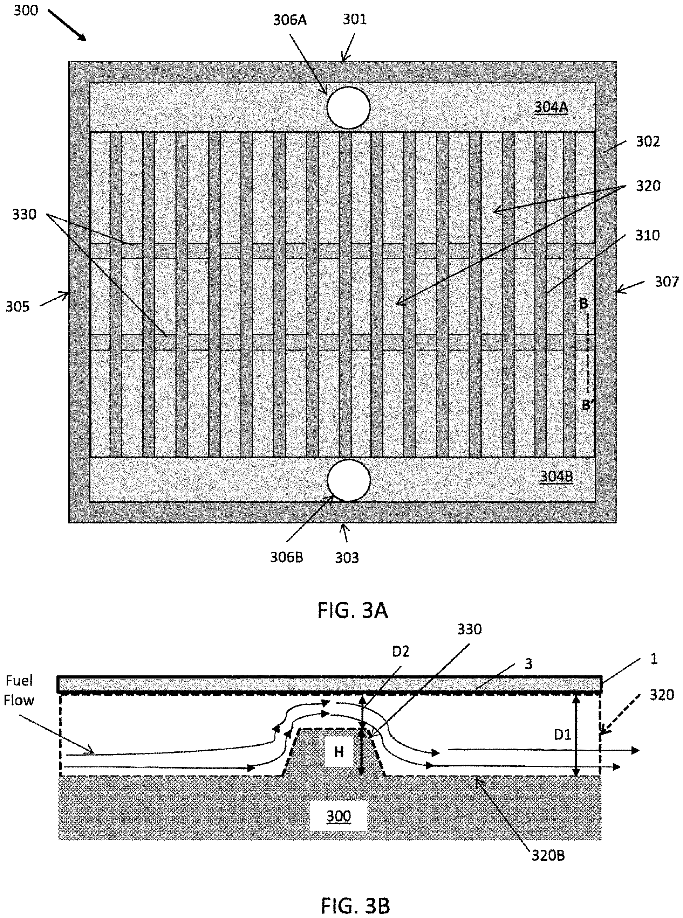

FIG. 3A is a top view of the fuel side of an interconnect 300, according to various embodiments of the present disclosure, and FIG. 3B is a cross-sectional taken along plane B-B' of FIG. 3A and including an adjacent fuel cell. The interconnect 300 may be similar to the comparative interconnect 10. As such, only the differences therebetween will be discussed in detail.

Referring to FIGS. 3A and 3B, the fuel-side of the interconnect 300 may include a frame seal region 302, a fuel inlet manifold 304A, a fuel outlet manifold 304B, a fuel inlet hole 306A, a fuel outlet hole 306B, fuel ribs 310, fuel channels 320, and flow modulators 330. The frame seal region 302 may be a planar surface that extends alone the perimeter of the interconnect 300. The frame seal region 302 may be coplanar with the tops of the fuel ribs 310. The fuel manifolds 304A, 304B may be disposed inside of the frame seal region 302, at opposing edges of the interconnect 300. The fuel holes 306A, 306B may be formed in the center of each of the fuel manifolds 304A, 304B, adjacent to opposing first and second edges 301, 303 of the interconnect 300.

The fuel ribs 310 and fuel channels 320 may extend between the fuel manifolds 304A, 304B in a direction parallel to opposing third and fourth edges 305, 307 of the interconnect 300. The fuel channels 320 may be at least partially defined by the fuel ribs 310 and may be configured to guide fuel flow across the interconnect 300 between the fuel inlet and outlet manifolds 304A, 304B. In one embodiment, the fuel channels 320 may have approximately the same width and/or pitch.

The flow modulators 330 may be configured to increase diffusion of a fuel flowing therethrough by disrupting fuel flow. One or more flow modulators 330 may be disposed in each of the fuel channels 320. For example, as shown in FIG. 3A, in some embodiments two flow modulators 330 may be formed in each fuel channel 320. However, the present disclosure is not limited to any particular number of flow modulators 330. For example, from 1 to 10 flow modulators 330, such as from 2 to 8, from 3 to 7, or from 4 to 5 flow modulators 330 may be disposed in each fuel channel 320. Fuel modulators may or may not have identical dimension or uniform spacing between fuel inlet and fuel outlet sides.

In one embodiment shown in FIG. 3B, the flow modulators 330 may be protrusions that extend from the bottom surface 320B of the fuel channels 320 to locally decrease a depth of the fuel channels 320 by an amount ranging from about 10% to about 60%. For example, the fuel channels 320 may have a first depth D1 which extends from the bottom surface 320B of the fuel channels 320 to the top of the fuel ribs 310. The flow modulators 330 may locally reduce the depth of the fuel channels 320 to a second depth D2 that ranges from about 40% to about 90% of the first depth D1. In other words, flow modulators 330 may have a height H that is from about 10% to 60% as large as the first depth D1. The flow modulators 330 may be formed by machining the interconnect 300 or may be formed during a powder pressing process used to manufacture the interconnect 300 from a metal powder.

Fuel flowing through the fuel channels 320 may be forced upwards by the flow modulators 330, such that the velocity of the fuel above the flow modulators 330 is increased. The velocity of the fuel may then decrease after the fuel passes the flow modulators 330. Accordingly, the flow modulators 330 may increase the fuel velocity by locally decreasing the depth and/or cross-sectional area of the fuel channels 320. This change in fuel velocity may increase fuel inter-diffusion, which may increase the Nernst potential at the anode 3 of an adjacent fuel cell 1 in the stack. The flow modulators 330 may also generate local fuel flow turbulence at and adjacent to the flow modulators 330, which may disrupt the fuel boundary layer at the surface of the interconnect 300 (e.g., at the bottom surface 320B of the fuel channels 320).

As shown in FIG. 3B, the flow modulators 330 may have a trapezoidal cross-sectional shape. However, the present disclosure is not limited thereto, and the flow modulators 330 may have any suitable cross-sectional shape, such as a rectangular, semicircular, triangular, etc.

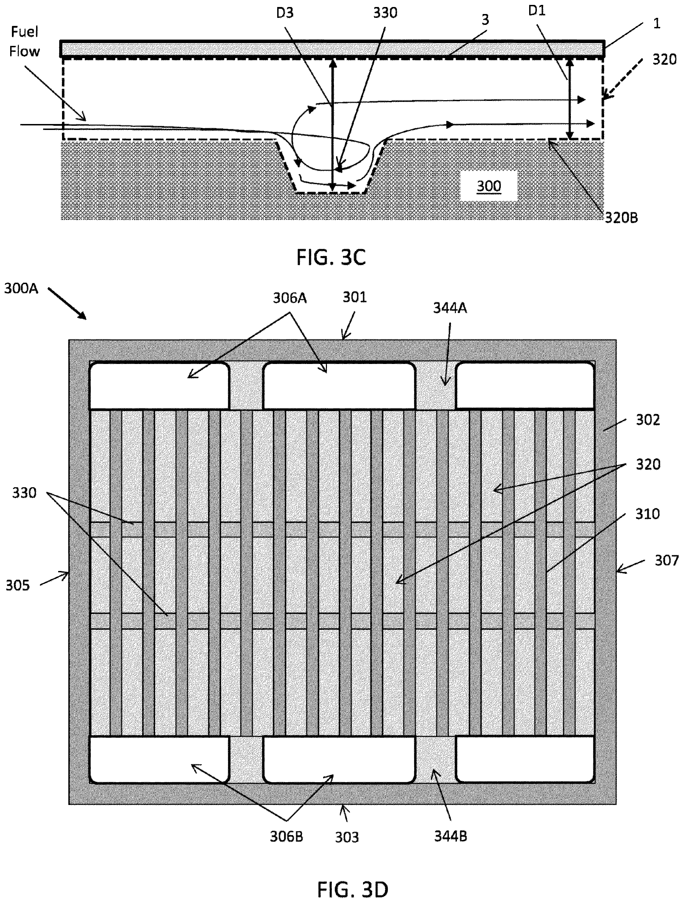

FIG. 3C is a cross-sectional view showing an alternative flow modulator 330 that may be included in the interconnect 300, according another embodiment of the present disclosure. Referring to FIGS. 3A and 3C, the flow modulators 330 may be depressions formed into the bottom surface 320B of the fuel channels 320 to locally increase a depth of the fuel channels 320 by from about 10% to about 60%. For example, the fuel channels 320 may have a first depth D1, and the flow modulators 330 may increase the depth of the fuel channels 320 to a third depth D3 that is from about 10% to about 60% greater than the first depth D1.

Fuel flowing through the fuel channels 320 may flow downwards into the flow modulators 330, such that the velocity of the fuel above the flow modulators 330 is decreased. The velocity of the fuel may then increase after the fuel passes the flow modulators 330. Accordingly, the flow modulators 330 may decrease the fuel velocity by locally increasing the depth and/or cross-sectional area of the fuel channels 320. This change in fuel velocity may increase fuel diffusion, which may increase the Nernst potential at the anode 3 of an adjacent fuel cell 1 in the stack. The flow modulators 330 also disrupt the fuel boundary layer at the surface of the interconnect 300 (e.g., at the bottom surface 320B of the fuel channels 320).

As shown in FIG. 3C, the flow modulators 330 may have a trapezoidal cross-sectional shape. However, the present disclosure is not limited thereto, and the flow modulators 330 may have any suitable cross-sectional shape, such as a rectangular, semicircular, triangular, etc.

FIG. 3D is a top view of the fuel side of an alternative interconnect 300A, according to an alternative embodiment of the present disclosure. The alternative interconnect 300A may be similar to the interconnect 300. As such, only the difference therebetween will be discussed in detail.

The alternative interconnect 300A differs from the interconnect 300 in that there are a plurality of fuel inlet holes 306A and fuel outlet holes 306B. For example, there may be two to six fuel inlet holes 306A, and two to six fuel outlet holes 306B. In the configuration shown in FIG. 3D, there are three fuel inlet holes 306A separated by two inlet support ribs 344A, and three fuel outlet holes 306B separated by two outlet support ribs 344B. In this alternative embodiment, the fuel inlet and outlet manifolds (304A, 304A) may be omitted. Furthermore, the alternative interconnect 300A may comprise a cross-flow interconnect where the air channels (not shown) on the air side of the interconnect extend perpendicular to the fuel channels 320. The alternative interconnect 300A also includes one or more flow modulators 330 described above.

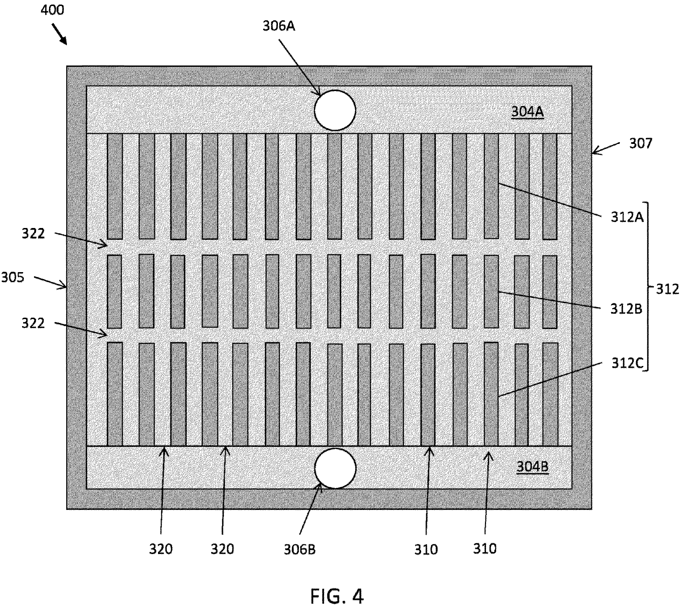

FIG. 4 is a top view of the fuel side of an interconnect 400, according to various embodiments of the present disclosure. The interconnect 400 may be similar to the interconnect 300. As such, only the difference therebetween will be discussed in detail.

Referring to FIG. 4, the flow modulators on the fuel side of the interconnect 400 may include one or more transverse channels 322 that extend laterally across the interconnect 400, between the third and fourth edges 305, 307. While two transverse channels 322 are shown in FIG. 4, the present disclosure is not limited to any particular number of transverse channels 322. Thus, the interconnect 400 may include one transverse channel 322 or two or more transverse channels 322. In one embodiment, the transverse channels 322 may extend perpendicular to the fuel channels 320. The transverse channels do not necessarily have to be equally spaced or be of identical widths.

The transverse channels 322 may be formed by removing or omitting portions of the fuel ribs 310. For example, the fuel ribs 310 may each be divided into rows of fuel rib segments 312, such as first, second, and third rib segments 312A, 312B, 312C, by the transverse channels 322. A distance between adjacent rib segments 312 (e.g., a width of the transverse channels 322) may range from about 0.5 mm to about 3 mm, such as from about 1 mm to about 2 mm.

The transverse channels 322 may fluidly connect the fuel channels 320. Accordingly, fuel may flow laterally through the transverse channels 322 and thereby move laterally between the fuel channels 320. As such, the transverse channels 322 may increase fuel diffusion and thereby increase the fuel utilization of an adjacent fuel cell, as well as disrupt the fuel boundary layer at the surface of the interconnect 400 (e.g., at the bottom surface 320B of the fuel channels 320).

While the interconnect 400 is illustrated with one fuel inlet hole 306A and one fuel outlet hole 306B, in other embodiments, the interconnect 400 may include plural fuel inlet holes 306A and plural fuel outlet holes 306B, as described above with respect to FIG. 3D.

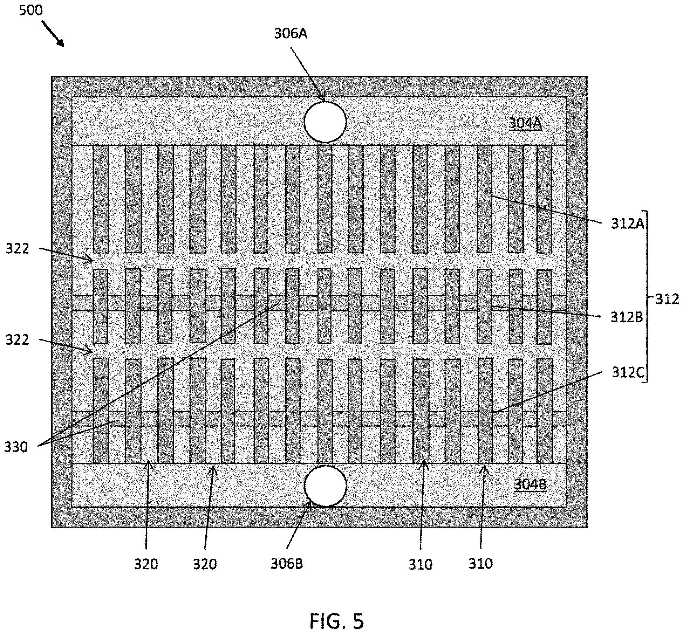

FIG. 5 is a top view of the fuel side of an interconnect 500, according to various embodiments of the present disclosure. The interconnect 500 may be similar to the interconnect 400. As such, only the difference therebetween will be discussed in detail.

Referring to FIG. 5, the flow modulators on the fuel side of the interconnect 400 may include one or more transverse channels 322 and one or more protrusions or depressions 300, described above with respect to FIGS. 5, 3A and 3B, respectively. For example, as shown in FIG. 5, the interconnect 500 may include two transverse channels 322 and the fuel channels 320 may include two flow modulators 330. However, any suitable number of transverse channels 322 and flow modulators 330 may be used. The transverse channels 322 and the protrusions and/or depressions 330 may both operate to increase fuel diffusion to an adjacent fuel cell 1 as well as disrupt the fuel boundary layer at the surface of the interconnect 500 (e.g., at the bottom surface 320B of the fuel channels 320).

While the interconnect 500 is illustrated with one fuel inlet hole 306A and one fuel outlet hole 306B, in other embodiments, the interconnect 400 may include plural fuel inlet holes 306A and plural fuel outlet holes 306B, as described above with respect to FIG. 3D.

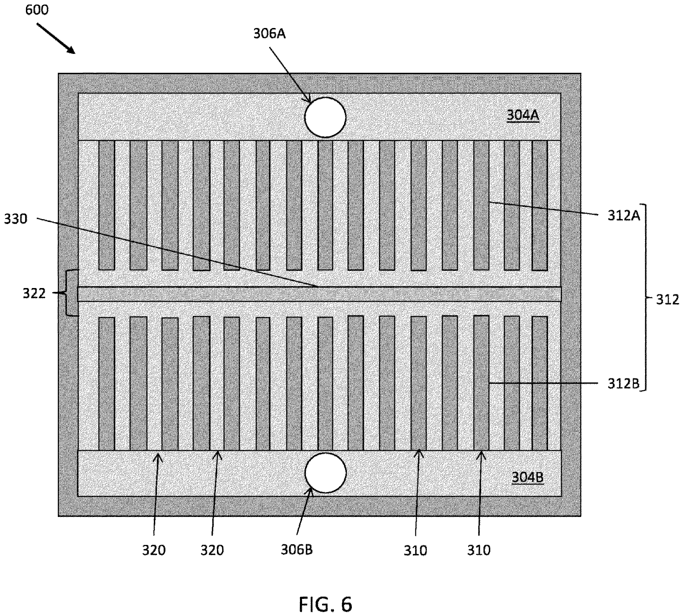

FIG. 6 is a top view of the fuel side of an interconnect 600, according to various embodiments of the present disclosure. The interconnect 600 may be similar to the interconnect 500. As such, only the difference therebetween will be discussed in detail.

Referring to FIG. 6, the flow modulators on the fuel side of the interconnect 400 may include one or more transverse channels 322 and one or more protrusions or depressions 300 located in the one or more transverse channel 322. In particular, the protrusion or depression 330 may extend through the transverse channel 322 and across the fuel channels 320. This configuration may increase fuel diffusion to the adjacent fuel cell 1 as well as disrupt the fuel boundary layer at the surface of the interconnect 600 (e.g., at the bottom surface 320B of the fuel channels 320).

While the interconnect 600 is illustrated with one fuel inlet hole 306A and one fuel outlet hole 306B, in other embodiments, the interconnect 400 may include plural fuel inlet holes 306A and plural fuel outlet holes 306B, as described above with respect to FIG. 3D.

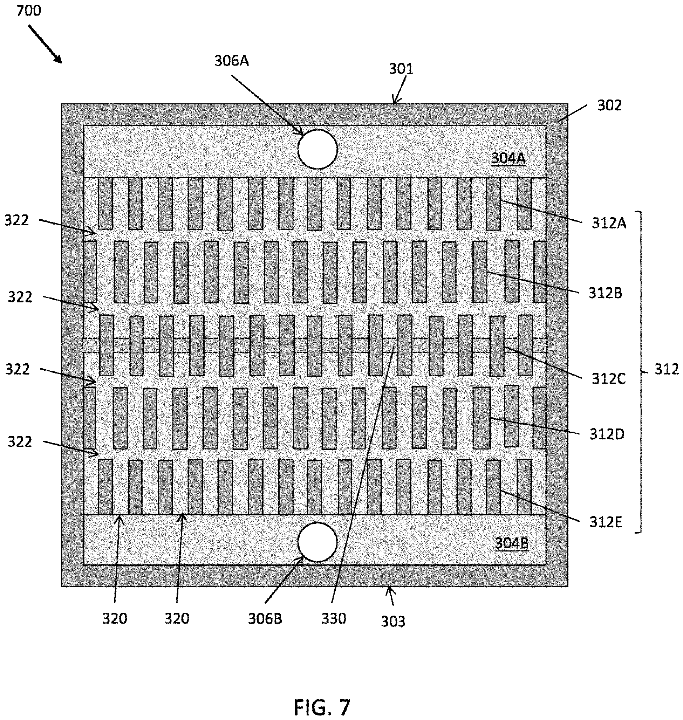

FIG. 7 is a top view of the fuel side of an interconnect 700, according to various embodiments of the present disclosure. The interconnect 700 may be similar to the interconnect 600. As such, only the difference therebetween will be discussed in detail.

Referring to FIG. 7, the fuel side of the interconnect 700 may include laterally offset fuel rib segments 312 (e.g., 312A to 312E) and the transverse channels 322. The fuel ribs 312 may be arranged in rows that are separated by the transverse channels 322. The fuel ribs 312 of adjacent row(s) are offset from one another in a fuel flow direction extending between the fuel inlet and outlet holes. Thus, the fuel channels 320 in this embodiment are serpentine rather than straight, and include segments which are offset in a horizontal direction perpendicular to the direction between the interconnect 700 sides 301, 303 located adjacent to the fuel inlet and outlet holes.

The fuel ribs 312 of each row may at least partially define and enclose the fuel channels 320. The fuel channels 320 may be fluidly connected by the transverse channels 322. As such, fuel may flow through the fuel channels 320 and transverse channels 322, such that fuel flows across the interconnect 700, from the fuel inlet hole(s) 306A to the fuel outlet hole(s) 306B, in a serpentine pattern. In other words, the fuel channels 320 and the transverse channels 322 may form serpentine fuel flow paths across the interconnect 700, which are configured to increase fuel diffusion to an adjacent fuel cell 1 anode 3 as well as disrupt the fuel boundary layer at the surface of the interconnect 700 (e.g., at the bottom surface 320B of the fuel channels 320).

The interconnect 700 may include one or more optional protrusions and/or depressions 330. For example, one or more optional protrusions and/or depressions 330 may optionally be disposed within the fuel channels 320, as described above with respect to FIGS. 3B and 3C. In other embodiments, one or more optional protrusions and/or depressions 330 may be disposed in the transverse channels 322, as described above with respect to FIG. 6.

While the interconnect 700 is illustrated with one fuel inlet hole 306A and one fuel outlet hole 306B, in other embodiments, the interconnect 400 may include plural fuel inlet holes 306A and plural fuel outlet holes 306B, as described above with respect to FIG. 3D.

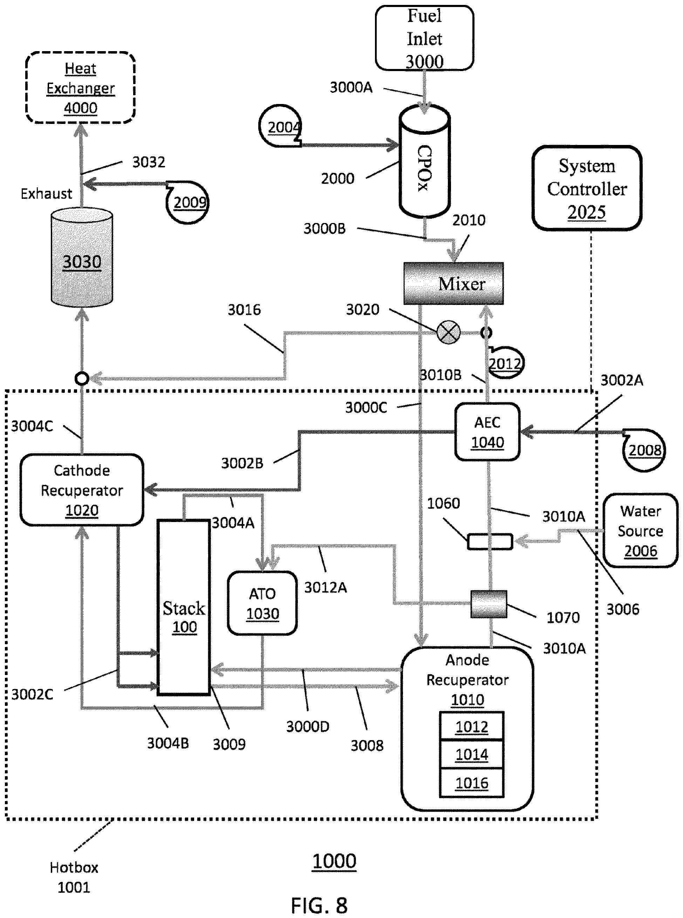

FIG. 8 is a schematic representation of a SOFC system 1000, according to a first embodiment of the present disclosure. Referring to FIG. 8, the system 1000 includes a hotbox 1001 and various components disposed therein or adjacent thereto. The hotbox 1001 may contain at least one fuel cell stack 100, such as a solid oxide fuel cell stack containing alternating fuel cells and interconnects. One solid oxide fuel cell of the stack contains a ceramic electrolyte, such as yttria stabilized zirconia (YSZ), scandia stabilized zirconia (SSZ), scandia and ceria stabilized zirconia or scandia, yttria and ceria stabilized zirconia, an anode electrode, such as a nickel-YSZ, a nickel-SSZ or nickel-doped ceria cermet, and a cathode electrode, such as lanthanum strontium manganite (LSM). The interconnects may be metal alloy interconnects, such as chromium-iron alloy interconnects. The stacks 100 may be arranged over each other in a plurality of columns.

The hotbox 1001 may also contain an anode recuperator heat exchanger 110, a cathode recuperator heat exchanger 1020, an anode tail gas oxidizer (ATO) 1030, an anode exhaust cooler heat exchanger 1040, an optional splitter 1070, and a water injector 1060. The system 1000 may also include a catalytic partial oxidation (CPOx) reactor 2000, a mixer 2010, a CPOx blower 2004 (e.g., air blower), a system blower 2008 (e.g., air blower), and an anode recycle blower 2012, which may be disposed outside of the hotbox 1001. However, the present disclosure is not limited to any particular location for each of the components with respect to the hotbox 1001.

The CPOx reactor 2000 receives a fuel inlet stream from a fuel inlet 3000, through fuel conduit 3000A. The fuel inlet 3000 may be a fuel tank or a utility natural gas line including a valve to control an amount of fuel provided to the CPOx reactor 2000. The CPOx blower 2004 may provide air to the CPOx reactor 2002 during system start-up. The fuel and/or air may be provided to the mixer 2010 by fuel conduit 3000B. Fuel flows from the mixer 2010 to the anode recuperator 1010 through fuel conduit 3000C. The fuel is heated in the anode recuperator 1010 by the fuel exhaust and the fuel then flows from the anode recuperator 1010 to the stack 100 through fuel conduit 3000D.

The system blower 2008 may be configured to provide an air stream (e.g., air inlet stream) to the anode exhaust cooler 1040 through air conduit 3002A. Air flows from the anode exhaust cooler 1040 to the cathode recuperator 1020 through air conduit 3002B. The air is heated by the ATO exhaust in the cathode recuperator 1020. The air flows from the cathode recuperator 1020 to the stack 100 through air conduit 3002C.

An anode exhaust (e.g., fuel exhaust stream) generated in the stack 100 is provided from a fuel outlet 3009 of the stack 100 through an anode exhaust conduit 3008 to the anode recuperator 1010. The anode exhaust may contain unreacted fuel and may also be referred to herein as fuel exhaust. The anode exhaust may be provided from the anode recuperator 1010 to the mixer 2010 by a recycling conduit 3010, which may include a first recycling conduit 3010A and a second recycling conduit 3010B. In particular, the first recycling conduit 3010A may fluidly connect an outlet of the anode recuperator 1010 to an inlet of the anode exhaust cooler 1040. The second recycling conduit 3010B may fluidly connect an outlet of the anode exhaust cooler 1040 to an inlet of the mixer 2010.

Water flows from a water source 2006, such as a water tank or a water pipe, to the water injector 1060 through a water conduit 3006 at least during a start-up mode of the system. The water flow may optionally be turned off during a steady-state mode of the system. The water injector 1060 may be configured to inject water into anode exhaust flowing through the first recycling conduit 3010A. Heat from the anode exhaust (also referred to as a recycled anode exhaust stream) vaporizes the water to generate steam which humidifies the anode exhaust. The humidified anode exhaust is provided to the anode exhaust cooler 1040. Heat from the anode exhaust provided to the anode exhaust cooler 1040 may be transferred to the air inlet stream provided from the system blower 2008 to the cathode recuperator 1020. The cooled humidified anode exhaust may then be provided from the anode exhaust cooler 1040 to the mixer 2010 via the second recycling conduit 3010B. The anode recycle blower 2012 may be configured to move the anode exhaust though the second recycling conduit 3010B.

The mixer 2010 is configured to mix the humidified anode exhaust with fresh fuel (i.e., fuel inlet stream). This humidified fuel mixture may then be heated in the anode recuperator 1010 by the anode exhaust, before being provided to the stack 100. The system 1000 may also include one or more fuel reforming catalysts 1012, 1014, and 1016 located inside of the anode recuperator 1010. Alternatively or additionally, the one or more fuel reforming catalysts 1012, 1014, and 1016 may be located downstream of the anode recuperator 1010 in the fuel conduit 3000D. The reforming catalyst(s) reform the humidified fuel mixture before it is provided to the stack 100.

The splitter 1070 may be operatively connected to the first recycling conduit 3010A and may be configured to divert a portion of the anode exhaust to the ATO 10300 via an ATO conduit 3012A. The ATO conduit 3012A may be fluidly connected to the cathode exhaust conduit 3004A or the ATO 1030.

Cathode exhaust generated in the stack 100 is provided to the ATO 1030 by cathode exhaust conduit 3004A. The cathode exhaust may be mixed with the anode exhaust before or after being provided to the ATO 1030. The mixture of the anode exhaust and the cathode exhaust may be oxidized in the ATO 1030 to generate an ATO exhaust. The ATO exhaust flows from the ATO 1030 to the cathode recuperator 1020, through cathode exhaust conduit 3004B. Exhaust flows from the cathode recuperator 1020 and out of the hotbox 1001 through cathode exhaust conduit 3004C.

The system 1000 may further include a system controller 2025 configured to control various elements of the system 1000. The controller 2025 may include a central processing unit configured to execute stored instructions. For example, the controller 2025 may be configured to control fuel and/or air flow through the system 1000, according to fuel composition data.

The present inventors have determined that during steady-state operations when a sufficient electrical load is applied to a fuel cell stack, ATO heat generation may not be required to maintain the desired SOFC stack 100 steady-stage operating temperature (e.g., a temperature above 700 °C, such as 750 to 900 °C). However, in conventional systems, the ATO may still be operated during steady-state mode in order to oxidize carbon monoxide present in the anode exhaust provided thereto. However, this oxidation may result in the release of a significant amount of heat that may not be necessary for steady-state operations.

Conventionally, the flow rate of the system air flow (i.e., the air inlet stream) provided by the system blower 2008 may be increased in order to compensate for such ATO heat release. However, as the air flow rate is increased, the temperature range of the fuel cells in the stack may also increase. For example, higher air flow rates may result in certain fuel cells operating at temperatures that are less than optimal, which may reduce overall power production. In addition, higher air flow rates may also result in a higher pressure drop along the air flow path. Both a higher air flow rate and a higher pressure drop may lead to higher overall system balance of plant power consumption and lower overall system efficiency.

In view of the above and/or other problems of conventional systems, in some embodiments of the present disclosure, at least during steady-state operation of the system, the anode exhaust may be mixed with the cathode exhaust leaving the hotbox 1001, or with an alternate fresh air stream, instead of being provided to the ATO. In some embodiments, a catalyst is utilized to support oxidation of the carbon monoxide, hydrocarbon fuel and/or hydrogen which remains in the anode exhaust. In alternative embodiment systems which exclusively use hydrogen fuel, the anode exhaust may be vented directly from the hotbox 1001 if desired. For combined heat and power (CHP) configurations, then anode exhaust may be vented into a cathode exhaust conduit, upstream of a CHP heat exchanger, to create heat for recovery in the CHP heat exchanger.

Referring again to FIG. 8, the SOFC system 1000 may include a bypass conduit 3016, a bypass valve 3020, and an exhaust oxidizer 3030. The bypass conduit 3016 fluidly connects the second recycling conduit 3010B to the cathode exhaust conduit 3004C. In some embodiments, the bypass conduit 3016 may be connected to the second recycling conduit 3010B downstream of the anode recycle blower 2012, with respect to an anode exhaust flow direction through the second recycling conduit 3010B, in order to provide additional exhaust flow pressure to the cathode exhaust conduit 3004C. However, in other embodiments, the bypass conduit 3016 may be fluidly connected to the second recycling conduit 3010B, upstream of the anode recycle blower 2012.

The exhaust oxidizer 3030 may be configured to oxidize ATO exhaust output from the ATO 1030 and/or anode exhaust output from the bypass conduit 3016. For example, the exhaust oxidizer 3030 may comprise a tube or conduit containing a catalyst that promotes oxidization of carbon monoxide and/or hydrogen into carbon dioxide and/or water, respectively. In one embodiment, the exhaust oxidizer 3030 is located outside the hotbox 1001. Thus, the heat generated by the exhaust oxidizer 3030 is not used to heat the SOFC stack 100.

The ATO conduit 3012A provides anode exhaust (e.g., an ATO fuel stream) output from the splitter 1070 to the ATO 1030. Anode exhaust flow from the splitter 1070 through the ATO conduit 3012A may be controlled by controlling the speed of the anode recycle blower 2012. For example, higher anode recycle blower 2012 speeds may result in lower anode exhaust flow to the ATO 1030, while lower anode recycle blower 2012 speeds may result in higher anode exhaust flow to the ATO 1030. In some embodiments, the speed of the anode recycle blower 2012 may be limited, in order to prevent backflow of cathode exhaust through the ATO conduit 312A and into the splitter 1070.

The bypass valve 3020 may be located outside of the hotbox 1001, in order to prevent damage to the bypass valve 3020 due to exposure to high temperatures inside of the hotbox 1001. The bypass valve 3020 may be configured to control the anode exhaust flow though the bypass conduit 3016, from the anode exhaust conduit 3010. In particular, during system 1000 startup, the bypass valve 3020 may be closed such that the anode exhaust is not provided to the exhaust oxidizer 3030 and the cathode exhaust conduit 3004C, and the anode recycle blower 2012 may be operated at a speed that does not pull all the anode exhaust out of the hotbox 1001, such that the ATO fuel stream is provided to the ATO 1030. Thus, the ATO 1030 operates during the startup mode of the system 1000 to oxidize the anode exhaust using the cathode exhaust, and to generate heat. The ATO heat is used to increase the temperature of the stack 100 during the startup mode before the stack 100 reaches it steady-state operating temperature (e.g., a temperature above 700 °C, such as 750 to 900 °C).

In contrast, during the steady-state operation after the stack 100 reaches it steady-state operating temperature (e.g., a temperature above 700 °C, such as 750 to 900 °C), the bypass valve 3020 may be open, such that at least a portion of anode exhaust is provided to cathode exhaust conduit 3004C and the exhaust oxidizer 3030 via the bypass conduit 3016, and the anode recycle blower 2012 speed/flow rate may be increased, to minimize the amount of anode exhaust provided to the ATO 1030 via conduit 3012A, while preventing the backflow of cathode exhaust.

Therefore, if sufficient current is drawn from the stack 100 (i.e., if the stack outputs electrical power above a threshold value specific to the stack 100), then the stack 100 generates sufficient heat during the steady-state mode to sustain a desired steady-state operating temperature, and the stack 100 does not require ATO heat. In some embodiments, the anode exhaust is provided to the ATO 1030 during the start-up mode and/or during a low current draw steady-state mode when insufficient current is drawn from the stack 100 to sustain the desired steady-state operating temperature.

For example, if the system controller 2025 detects that the current drawn from the stack 100 falls below a predetermined threshold current value required to maintain the desired steady-state operating temperature (i.e., the stack operating temperature value above a threshold temperature value (e.g., a temperature above 700 °C, such as 750 to 900 °C)), then a portion of the anode exhaust is provided to the ATO 1030 to generate heat in the ATO 1030. The ATO heat is provided to the stack 100 to maintain the stack above the threshold temperature value. The threshold current value depends on the stack size, fuel cell composition, fuel composition provided to the stack, cumulative level of stack degradation, etc. In one embodiment, the threshold current value may comprise 10 to 30 Amps, such as 20 to 25 Amps. The anode exhaust may or may not be provided to the exhaust oxidizer 3030 during the low current draw steady-state mode.

Once the system controller 2025 detects that sufficient current is drawn on the stack 100 is equal to or above the threshold current value needed to maintain the stack above the threshold temperature value, then the system 1000 exits the low current draw steady-state mode and enters a regular steady-state mode. In the regular steady-state mode, the flow rate of anode exhaust through the anode recycle blower 2012 is increased and a minimal amount of anode exhaust is provided to the ATO 1030. For example, the anode recycle blower 2012 may be operated at a relatively high speed, such that a majority of the anode exhaust is pulled from the hotbox 1001 and provided to the exhaust oxidizer 3030 and none of or only a small minority of (e.g., less than 20 volume percent, such as 1 to 10 volume percent) the anode exhaust is provided to the ATO 1030, during the regular steady-state mode.

In one embodiment, the bypass valve 3020 may be a proportionate valve configured to control the anode exhaust flow rate through the bypass conduit 3016. In some embodiments, the system controller 2025 may be configured to gradually open the bypass valve 3020 and gradually increase the speed of the anode recycle blower 2012, during transition from startup to steady-state operation, and/or during steady-state operation. In addition, the system controller 2025 may be configured to gradually reduce the speed of the system blower 2008, in order to compensate for a reduction in the heat output of the ATO 1030.

The exhaust oxidizer 3030 may be disposed outside of the hotbox 1001, such that heat generated by the oxidation reactions thereby does not unnecessarily heat system components. As a result, total system airflow may be reduced. In particular, the system air blower 2008 may be operated at a lower speed, as compared to if the anode exhaust was provided to the ATO 1030 during steady-state operation. In other words, the steady-state power consumption of the system blower 2008 may be significantly reduced. In addition, cell-to-cell temperature variations may be reduced, which may increase cell voltage and efficiency.

In some embodiments, the system 1000 may optionally include a cabinet air blower 2009 configured to provide cabinet air to cathode exhaust conduit 3004C or the system exhaust conduit 3032. In particular, the system 1000 may be disposed in a cabinet, and the cabinet air blower 2009 may be configured to provide cabinet air to cool the exhaust output from the system 1000, in embodiments where cooler system exhaust is needed.

In various other embodiments, the system 1000 may include a system exhaust conduit 3032 configured to provide exhaust output from the exhaust oxidizer 3030 to a heat exchanger 4000, which may be used to provide heat to external components, such as a building hot water system. In one embodiment shown in FIG. 8, additional air may be provided by the cabinet air blower 2009 to the cathode exhaust conduit 3004C in order to reduce exhaust temperatures.

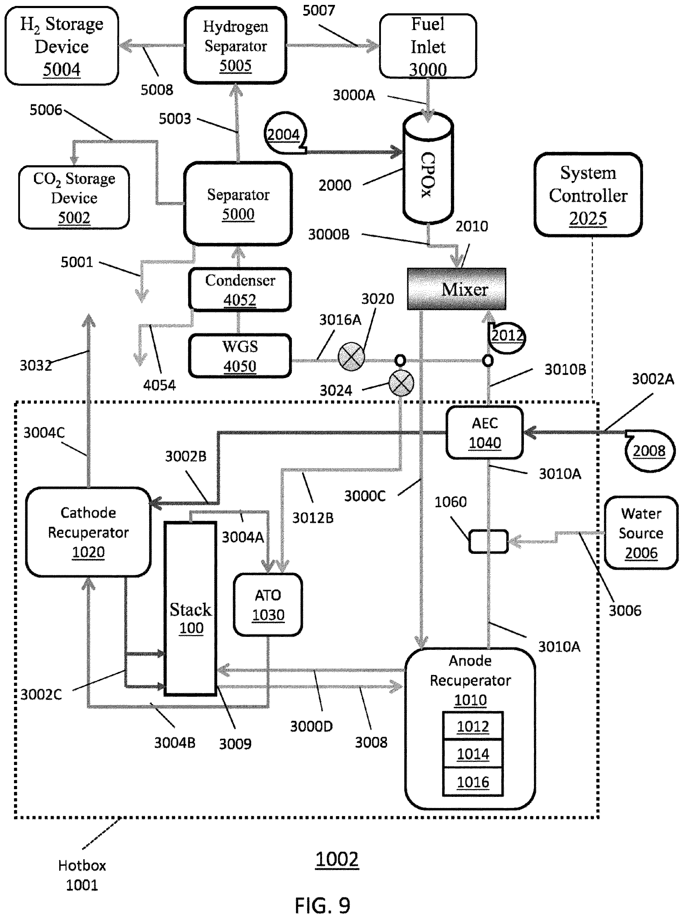

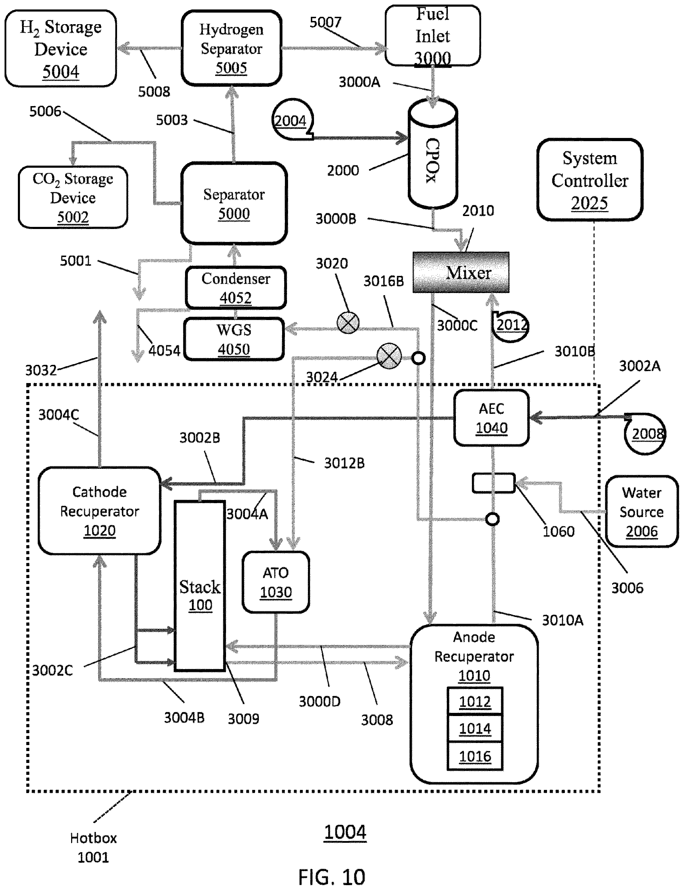

In some embodiments, some anode exhaust may be provided to the ATO 1030 during startup and steady-state operating modes. In other embodiments shown in FIGS. 9 and 10, the splitter 1070 and the ATO conduit 3012A may be omitted. In these embodiments, no anode exhaust is directly provided to the ATO 1030 from within the hotbox 1001, during any operating mode. Instead, the anode exhaust is provided to the ATO 1030 from outside the hotbox 1001 during start-up mode and occasionally during the steady-state mode if there is a nitrogen gas buildup in the anode exhaust stream. In this case, by routing the anode exhaust through the ATO 1030, the excess nitrogen is vented through the ATO 1030 and then out of the system 1002, 1004 via the system exhaust conduit 3032.

In the embodiments of FIGS. 9 and 10, the anode exhaust conduits 3016A and 3016B are fluidly connected via an optional water gas shift reactor 4050 and a water condenser 4052 to an anode exhaust separator 5000 instead of the cathode exhaust conduit 3004C or the system exhaust conduit 3032. The water gas shift reactor 4050 may be used to increase the hydrogen content in the anode exhaust if hydrogen is separated from the anode exhaust downstream of the anode exhaust separator 5000. Alternatively, if the hydrogen is not separated from the anode exhaust, then the water gas shift reactor 4050 may be omitted. The condenser 4052 may comprise any suitable condenser, such as an air or water cooled condenser, which removes water from the anode exhaust. The water cooled condenser may be either an indirect (e.g., traditional heat exchanger) type or direct contact type condenser. The water is removed from the condenser 4052 via a water outlet conduit 4054.

The anode exhaust separator 5000 may comprise any device which separates components of the anode exhaust from each other. The anode exhaust separator 5000 may comprise one or more pieces of equipment used to separate components of the anode exhaust from each other in one or more process steps. For example, the anode exhaust separator 5000 may comprise a carbon dioxide separator which separates carbon dioxide and water from the remaining anode exhaust components, such as carbon monoxide, nitrogen, hydrogen, and trace hydrocarbon fuel remnants. The separated water removed from the anode exhaust separator 5000 via a water drain conduit 5001. The separated carbon dioxide is provided from the anode exhaust separator 5000 via conduit 5006 to a carbon dioxide storage device 5002. The remaining anode exhaust (e.g., any remaining carbon dioxide, carbon monoxide, nitrogen, hydrogen, and trace hydrocarbon fuel remnants) is removed from the anode exhaust separator 5000 via an outlet conduit 5003.

The outlet conduit 5003 provides the remaining anode exhaust to an optional hydrogen separator 5005 which separates hydrogen from the remaining anode exhaust. In one embodiment, the hydrogen separator may comprise an electrochemical separator comprising a polymer proton exchange membrane. In another embodiment, the hydrogen separator may be a pressure swing adsorption type hydrogen separator. Other hydrogen separators may also be used. The separated hydrogen is provided from the hydrogen separator 5005 to an optional hydrogen storage device 5004 via an optional conduit 5008. The remaining anode exhaust (e.g., any remaining carbon monoxide, nitrogen, hydrogen, and trace hydrocarbon fuel remnants) may be provided to the fuel inlet 3000 via a waste gas recycle conduit 5007. Alternatively, the hydrogen storage device 5004, the hydrogen separator 5005, and the conduit 5008 are omitted, and the outlet conduit 5003 is connected directly to the fuel inlet 3000 to recycle the anode exhaust from the anode exhaust separator 5000 directly into the fuel inlet 3000.

Thus, the anode exhaust separator 5000 is fluidly connected to the carbon dioxide storage device 5002 via the conduit 5006, and to the optional hydrogen storage device 5004 via the conduit 5008. The storage devices 5002, 5004 may comprise gas storage tanks, liquid storage tanks or both.

Alternatively, if the fuel inlet 3000 provides an ammonia fuel, then the condenser 4052 separates hydrogen and nitrogen from water in the anode exhaust. Furthermore, the hydrogen and nitrogen may optionally be separated from each other in the hydrogen separator 5005. In this case, the anode exhaust separator 5000 is fluidly connected to the water drain conduit 5001, and to the hydrogen storage device 5004 via conduit 5008. The carbon dioxide storage device 5002 may be omitted or it may comprise a water storage tank.

FIG. 9 is a schematic representation of a SOFC system 1002, according to a second embodiment of the present disclosure. The SOFC system 1002 is similar to the SOFC system 1000 of FIG. 8. Accordingly, only the differences there between will be discussed in detail.

Referring to FIG. 9, SOFC system 1002 may include a bypass conduit 3016A, an ATO conduit 3012B, and an ATO valve 3024. The bypass conduit 3016A may fluidly connect the second recycling conduit 3010B to the optional water gas shift reactor 4050, the condenser 4052 and the anode exhaust separator 5000 upstream of the anode recycle blower 2012. However, in other embodiments, the bypass conduit 3016A may be connected to the second recycling conduit 3010B downstream of the anode recycle blower 2012, if higher a higher anode exhaust flow rate is needed. The ATO conduit 3012B may fluidly connect the bypass conduit 3016 to the ATO 1030.

The bypass valve 3020 may be configured to control the anode exhaust flow though the bypass conduit 3016A, and the ATO valve 3024 may be configured to control the anode exhaust (e.g., an ATO fuel stream) flow through the ATO conduit 3012B to the ATO 1030. In some embodiments, the valves 3020 and 3024 may be proportionate valves configured to provide various flow rates through their respective conduits 3016A and 3012B. In particular, during system startup, the bypass valve 3020 may be closed and the ATO valve 3024 may be opened by the system controller 2025, such that anode exhaust is provided to the ATO 1030 and no anode exhaust is provided to the anode exhaust separator 5000. The ATO valve 3024 may be partially opened continuously or may be opened and closed periodically.

During steady-state operation, the bypass valve 3020 may be opened and the ATO valve 3024 may be closed by the system controller 2025, such that some of the anode exhaust in the second recycling conduit 3010B is diverted into the anode exhaust separator 5000, and the anode exhaust is not provided to the ATO 1030 via the ATO conduit 3012B. Alternatively, if there is nitrogen build up in the anode exhaust, then the controller may open the ATO valve 3024 during the steady-state mode to provide at least a portion of the anode exhaust to the ATO 1030, which permits the excess nitrogen to be vented out of the system 1002 through the system exhaust conduit 3032.

In some embodiments, the system controller 2025 may be configured to gradually open the bypass valve 3020 and gradually close the ATO valve 3024, during transition from startup to steady-state operation, and/or during steady-state operation. In addition, the system controller 2025 may be configured to gradually reduce the speed of the system blower 2008, in order to compensate for a reduction in the heat output of the ATO 1030, as the ATO fuel stream is reduced and/or after the ATO fuel stream is stopped.

FIG. 10 is a schematic representation of a SOFC system 1004, according to a third embodiment of the present disclosure. The SOFC system 1004 is similar to the SOFC system 1002 of FIG. 9. Accordingly, only the differences there between will be discussed in detail.

Referring to FIG. 10, the SOFC system 1004 may include a bypass conduit 3016B that fluidly connects the first recycling conduit 3010A to the optional wafter gas shift reactor 4050, the condenser 4052 and the anode exhaust separator 5000. In other words, the bypass conduit 3016B may be configured to the divert anode exhaust flowing from the anode recuperator 1010 to the anode exhaust cooler 1040 to the anode exhaust separator 5000. The optional ATO conduit 3012B fluidly connects the bypass conduit 3016B to the ATO 1030.

The bypass valve 3020 may be configured to control anode exhaust flow though the bypass conduit 3016B, and the ATO valve 3024 may be configured to control anode exhaust flow through the ATO conduit 3012B to the ATO 1030. In particular, during system startup, the bypass valve 3020 may be closed and the ATO valve 3024 may be opened by the system controller 2025, such that anode exhaust is provided to the ATO 1030 and anode exhaust is not provided to the anode exhaust separator 5000. During steady-state operation, the bypass valve 3020 may be opened and the ATO valve 3024 may be closed by the system controller 2025, such that anode exhaust is provided to the anode exhaust separator 5000 and anode exhaust is not provided to the ATO 1030. Alternatively, if there is nitrogen build up in the anode exhaust, then the controller may open the ATO valve 3024 during the steady-state mode to provide at least a portion of the anode exhaust to the ATO 1030, which permits the excess nitrogen to be vented out of the system 1002 through the system exhaust conduit 3032. The ATO valve 3024 may be partially opened continuously or may be opened and closed periodically.

In some embodiments, the system controller 2025 may be configured to gradually open the bypass valve 3020 and gradually close the ATO valve 3024, during transition from startup to steady-state operation, and/or during steady-state operation. In addition, the system controller 2025 may be configured to gradually reduce the speed of the system blower 2008, in order to compensate for a reduction in the heat output of the ATO 1030, as the ATO fuel stream is reduced and/or after the ATO fuel stream is stopped.

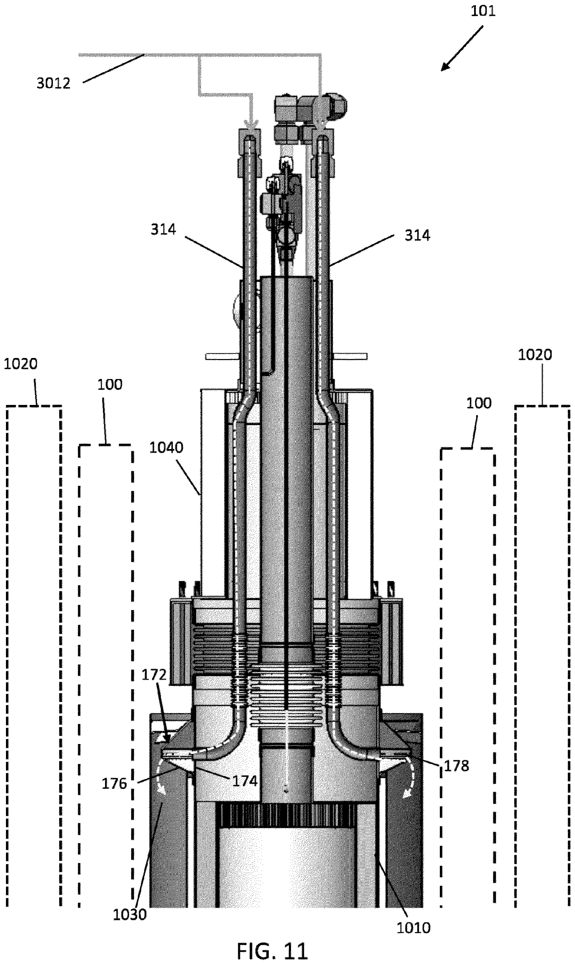

FIG. 11 is a cross-sectional view of a portion of a central column 101 that may be included in the SOFC systems 1000, 1002, and/or 1004. Referring to FIGS. 8-11 , the central column 101 may include the anode recuperator 1010, the ATO 1030, and the anode exhaust cooler 1040. The anode recuperator 1010 is located in the core of the central column 101. The ATO 1030 may comprise a toroidal manifold containing an ATO catalyst which surrounds the anode recuperator 1010. The anode exhaust cooler 1040 may be located above anode recuperator 1010 and the ATO 1030. The fuel cell stacks 100 may surround the ATO 1030, and the cathode recuperator 1020 may surround the fuel cell stacks 100.

An ATO conduit 3012, which may be any of the ATO conduits 3012A, 3012B, 3012C described above, may be divided into two or more column conduits (e.g., two to six pipes or manifolds) 314 that extend from the top of the central column 101 to an ATO injector 172. The ATO injector 172 may comprise an annular space having an inner radial sidewall 174 connected to the outlets of the column conduits 314, and an outer sidewall 176 which protrudes into the top of the ATO 130. In one embodiment, the outer sidewall 176 may have a curved vertical profile with a middle section protruding radially outward from the tapered top and bottom sections. The outer sidewall 176 contains one or more openings 178, such as slits located in the middle section. The openings 178 fluidly connect the interior space of ATO injector 172 to the interior space of the ATO 1030. In particular, the column conduits 314 and may be configured to provide multiple anode exhaust streams from the ATO conduit 3012 to the ATO 1030 through the openings 178 in the ATO injector 172, as shown by the dashed arrows in FIG. 11. The radial separation of the anode exhaust stream into multiple anode exhaust streams in the ATO injector improves radial flow and mixing of the anode exhaust in the ATO 1030.

When the SOFC system 1000, 1002 or 1004 is operated using natural gas as a fuel, the stack 100 has a high fuel utilization. In particular, one of ordinary skill in the art would expect that anode exhaust output from the stack 100 would comprise CO, COz, H₂, HzO, N₂, and a very small amount of CH₄ (e.g., about 1 ppm or less).

However, the present inventors unexpectedly determined that the anode exhaust leaving the stack 100 may include significant amounts of hydrocarbon compounds, such as methane, ethane, propane, and/or butane, when natural gas is used as fuel. For example, the anode exhaust may include from 600-1000 ppm CH₄, from 40-80 ppm C₂H₆, from 5-10 ppm C₃H₈, from 2-10 ppm butane, and trace amounts of higher hydrocarbons.

Accordingly, it is believed that at least 1% of the hydrocarbon fuel provided to the stack 100 may not react (i.e., is not converted to CO, COz, H₂ and/or H₂O) at the anode electrode 3 surfaces of the stack 100 and is output in the anode exhaust. When other fuels such as ammonia are provided to the system 1000, 1002 and/or 1004, a similar amount of unreacted fuel components (e.g., ammonia) is output in the anode exhaust, as determined by the pH of water in condensed anode exhaust.

Furthermore, if the anode exhaust is processed to collect and/or separate components thereof, such as in the anode exhaust separator 5000, then the unreacted hydrocarbon compounds or ammonia in the anode exhaust may contaminate the resultant product. For example, when the anode exhaust is provided to the anode exhaust separator 5000, the hydrocarbon compounds may contaminate the separated COz product stream provided to the carbon dioxide storage device 5002, unless further complicated and/or costly processes are performed to remove such contaminants. Even if the anode exhaust is reacted in the ATO, the unreacted hydrocarbons may cause an issue. Hydrocarbon fuels are harder to oxidize than carbon monoxide and hydrogen, and some hydrocarbon fuel may pass through the ATO unreacted unless the anode tail gas oxidation process is well controlled. After passing the ATO, some of the unreacted hydrocarbon fuel may partially oxidize forming carbon monoxide. Thus, unreacted hydrocarbon fuel that remains in the anode exhaust stream leaving the stack 100, may result in increased hydrocarbon and/or carbon monoxide emissions from the system at the parts per million level. Likewise, the unreacted ammonia may contaminate the separated water in conduit 5001.

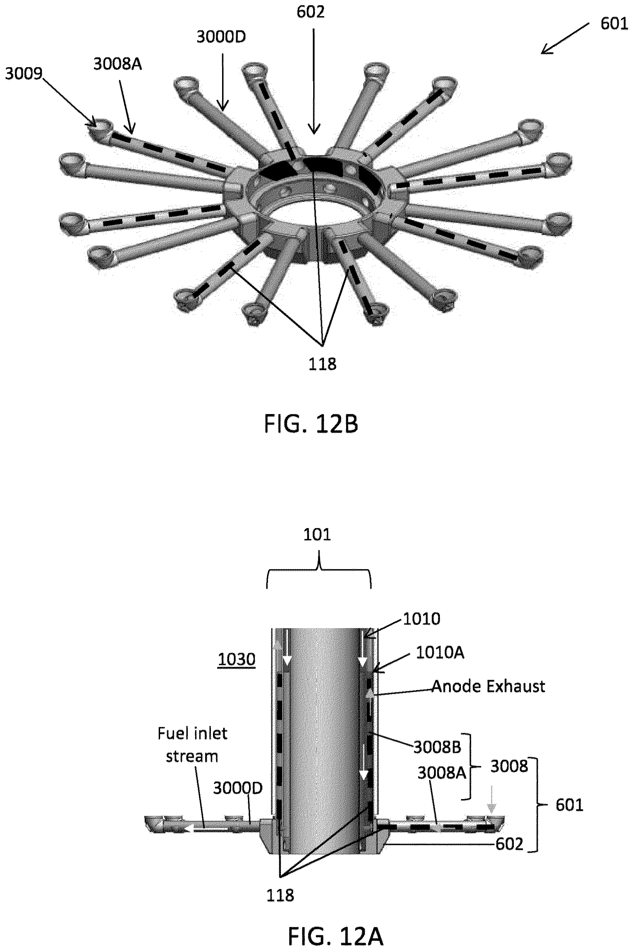

According to various embodiments of the present disclosure shown in FIGS. 12A and 12B, a reformation catalyst 118 is included in at least one anode exhaust passage downstream of the stack 100 for reducing the hydrocarbon and/or ammonia content of anode exhaust.

The reformation catalyst 118 may be configured to reduce a hydrocarbon content of the anode exhaust to about 50 ppm or less, such as about 25 ppm or less, about 10 ppm or less, about 5 ppm or less, or about 1 ppm or less. For example, the reformation catalyst 118 may comprise a precious metal catalyst, such as platinum and/or rhodium, a base metal catalyst, or the like which catalyzes conversion of hydrocarbon compounds to hydrogen and a carbon compound (e.g., an oxide of carbon). The reformation catalyst 118 may be a supported catalyst including a catalyst metal supported on a porous support, such as a porous ceramic (e.g., alumina) support. Given the low concentrations of the hydrocarbons or ammonia in this stream, full conversion is likely to be limited by mass transfer to the catalyst surface. Therefore, a catalyst support that includes more tortuous paths (compared to a straight through path, is more preferred because it is likely to have a higher conversion.

In various embodiments, the reformation catalyst 118 may be included in the anode exhaust conduit 3008 (as will be described in more detail with regard to FIG. 12B) and/or the base 602 of the anode exhaust distribution structure 601 located below the central column 101 (as will be described in more detail with regard to FIG. 12A. In one embodiment, for the reformation catalyst 118 included in the base 602 of the anode exhaust distribution structure 601, as shown in FIG. 12A, mechanical and/or thermal expansion considerations may make it advantageous to wrap the reformation catalyst 118 in a flexible, but less permeable layer (e.g., mantle) to accommodate differential thermal expansion between the catalyst and the surrounding conduit. Thus, in one embodiment, at least a portion of the reformation catalyst 118 is wrapped in a mantle which is softer than the reformation catalyst. The anode exhaust distribution structure 601 is used to distribute fuel evenly from the central column 101 to plural fuel cell stacks 100 or columns. The anode exhaust distribution structure fluidly connecting a fuel outlet 3009 of the stack 100 to an anode exhaust inlet 1010A of the anode recuperator 1010. The anode exhaust distribution structure 601 includes a cylindrical hub base 602 and a "spider" hub of fuel inlet pipes 3000D and anode exhaust pipes 3008A. Thus, the anode exhaust conduit 3008 comprises a first portion 3008A which may be a horizontal anode exhaust pipe which extends from and fluidly connects a fuel outlet of a respective stack 100 to the hub base 602, and a second portion 3008B which is an annular vertical manifold which extends from the hub base 602 to the anode recuperator 1010 and which fluidly connects the hub base 602 to the anode recuperator 1010. The second portion 3008B (i.e., the annular vertical manifold) also comprises a portion of the anode exhaust distribution structure 601. The annular vertical manifold may comprise a space between an inner cylinder forming the outer wall of the fuel conduit 3000C and the surrounding outer cylinder forming the inner wall of the ATO 1030 through which the entire anode exhaust stream flows from the hub base 602 into the anode recuperator 1010. Thus, the anode exhaust streams flow from each stack 100 through a respective pipe 3008A into the hub base 602, where the anode exhaust streams are combined into a single anode exhaust stream, which then flows into the anode recuperator 1010 through the manifold 3008B.

For example, the reformation catalyst 118 may be coated on inner surfaces of the anode exhaust conduit 3008 (e.g., the inner surfaces of the pipe 3008A and/or the manifold 3008B) and/or the inner surfaces of the hub base 602. In other embodiments, the reformation catalyst 118 may be a supported catalyst disposed within the anode exhaust conduit 3008 and/or the hub base 602 (e.g., on the inner wall of the hub base 602). Thus, the reformation catalyst 118 may be exposed to the anode exhaust flowing into the anode recuperator 110. The reformation catalyst 118 may be coated on a structured support designed to fit in the respective conduit (e.g., tube or annulus). Alternatively, the reformation catalyst may be coated on an unstructured support (e.g., a support in a form of pellets located in the respective conduit).

According to various embodiments, a method of operating the SOFC system 1000, 1002 and/or 1004 includes providing anode exhaust generated by the fuel cell stack 100 to the anode exhaust distribution structure 601, such that a hydrocarbon content of the anode exhaust is reduced by the reformation catalyst 118. The anode exhaust may then be provided to the anode exhaust separator 5000. The anode exhaust separator 5000 may separate the anode exhaust into a carbon dioxide stream and a hydrogen stream, which may be stored in the carbon dioxide storage device 5002 and the hydrogen storage device 5004, respectively. In some embodiments, the anode exhaust may be provided through the anode exhaust cooler 1040 where it is cooled by the air inlet stream before being provided to the anode exhaust separator 400.

As noted above, the hydrocarbon content of the anode exhaust may be relatively small (e.g., about 0.2 vol%, such as about 0.1 vol% or less of the total volume of the anode exhaust). As such, heat consumed by the reformation catalyst 118 during hydrocarbon reformation may not represent a significant change to the thermal profile of the SOFC system 10.

The reformation catalyst 118 may unexpectedly provide collection of high purity COz, without the use of conventional complicated and/or costly purification processes when the system operates on hydrocarbon fuel. Accordingly, the reformation catalyst 118 may improve the purity of the COz output from the anode exhaust separator 5000 to the COz storage device 5002 and/or improve the purity of water output from the anode exhaust separator 5000 when the system operates on ammonia fuel.

Although the foregoing refers to particular preferred embodiments, it will be understood that the invention is not so limited. It will occur to those of ordinary skill in the art that various modifications may be made to the disclosed embodiments and that such modifications are intended to be within the scope of the invention. All of the publications, patent applications and patents cited herein are incorporated herein by reference in their entirety.
**The invention also refers to the following embodiments, wherein the term "claim" means "embodiment":**
1. A fuel cell system, comprising:
   a stack of fuel cells;
   an anode recuperator configured to heat fuel provided to the stack using anode exhaust generated by the stack;
   an anode exhaust distribution structure fluidly connecting a fuel outlet the stack to an anode exhaust inlet of the anode recuperator; and
   a reformation catalyst disposed in the anode exhaust distribution structure.
2. The fuel cell system of claim 1, wherein the anode exhaust distribution structure comprises an anode exhaust conduit and a hub base.
3. The fuel cell system of claim 2, wherein the anode exhaust conduit comprises:
   a first portion fluidly connecting the fuel outlet the stack to the hub base and configured to receive the anode exhaust from the stack; and
   a second portion fluidly connecting the hub base to the anode recuperator.
4. The fuel cell system of claim 3, wherein:
   the first portion of the anode exhaust conduit comprises a horizontal anode exhaust pipe which extends from fuel outlet of the stack to the hub base; and
   the second portion of the anode exhaust conduit comprises annular vertical manifold which extends from the hub base to the anode recuperator.
5. The fuel cell system of claim 3, wherein the reformation catalyst is disposed in at least one of the first portion of the anode exhaust conduit, the second portion of the anode exhaust conduit or in the hub base, and at least a portion of the reformation catalyst is wrapped in a mantle which is softer than the reformation catalyst.
6. The fuel cell system of claim 1, wherein the reformation catalyst is configured to reduce a hydrocarbon or ammonia content of the anode exhaust.
7. The fuel cell system of claim 6, wherein reformation catalyst is configured to reduce the hydrocarbon or ammonia content of the anode exhaust to 5 parts-per-million (ppm) or less.
8. The fuel cell system of claim 1, wherein the reformation catalyst comprises a precious metal catalyst or a base metal catalyst.
9. The fuel cell system of claim 1, further comprising an anode exhaust separator configured to separate COz from the anode exhaust output from the anode recuperator.
10. The fuel cell system of claim 1, wherein the anode recuperator is located in a central column which further comprises an anode tail gas oxidizer (ATO), and the anode exhaust distribution structure is disposed under the central column.
11. A method of operating a fuel cell system, comprising:
   providing anode exhaust generated by a stack of fuel cells to an anode exhaust distribution structure comprising a reformation catalyst;
   providing anode exhaust output from the anode exhaust distribution structure to an anode recuperator; and
   providing a fuel inlet stream to the anode recuperator, wherein the anode exhaust heats the fuel inlet stream in the anode recuperator.
12. The method of claim 11, wherein the anode exhaust distribution structure comprises an anode exhaust conduit and a hub base.
13. The method of claim 12, wherein the anode exhaust flows from the stack through a first portion of the anode exhaust conduit to the hub base, and from the hub base through a second portion of the anode exhaust conduit to the anode recuperator.
14. The method of claim 13, wherein:
   the first portion of the anode exhaust conduit comprises a horizontal anode exhaust pipe which extends from fuel outlet of the stack to the hub base; and
   the second portion of the anode exhaust conduit comprises annular vertical manifold which extends from the hub base to the anode recuperator.
15. The method of claim 13, wherein the reformation catalyst is disposed in at least one of the first portion of the anode exhaust conduit, the second portion of the anode exhaust conduit or in the hub base.
16. The method of claim 1, wherein the reformation catalyst is configured to reduce a hydrocarbon or ammonia content of the anode exhaust.
17. The method of claim 16, wherein reformation catalyst is configured to reduce the hydrocarbon or ammonia content of the anode exhaust to 5 parts-per-million (ppm) or less.
18. The method of claim 17, further comprising separating hydrogen from COz in anode exhaust output from the anode recuperator.
19. The method of claim 11, wherein the reformation catalyst is configured to reduce an ammonia content of the anode exhaust.
20. The method of claim 19, further comprising separating hydrogen from water in anode exhaust output from the anode recuperator.
21. An interconnect for a fuel cell stack, the interconnect comprising:
   fuel ribs disposed on a first side of the interconnect and a least partially defining fuel channels;
   at least one flow modulator disposed in the fuel channels and configured to disrupt a fuel boundary layer at a surface of the fuel channels; and
   air ribs disposed on an opposing second side of the interconnect and at least partially defining air channels.
22. The interconnect of claim 21, wherein the at least one flow modulator comprises protrusions that locally reduce a depth of the fuel channels.
23. The interconnect of claim 22, wherein the at least one flow modulator reduces the depth of the fuel channels by 10% to 60%.
24. The interconnect of claim 21, wherein the at least one flow modulator comprises depressions that locally increase a depth of the fuel channels.
25. The interconnect of claim 24, wherein the at least one flow modulator increases the depth of the fuel channels by 10% to 60%.
26. The interconnect of claim 21, wherein the at least one flow modulator comprises at least one transverse channel that extends across and fluidly connects the fuel channels, and the at least one transverse channel separates the fuel ribs into rows of fuel rib segments.
27. The interconnect of claim 26, wherein the at least one flow modulator further comprises protrusions or depressions located in the fuel channels.
28. The interconnect of claim 26, wherein the at least one flow modulator further comprises at least one protrusion or depression located in the at least one transverse channel.
29. The interconnect of claim 26, wherein:
   the fuel rib segments of each row are laterally offset with respect to the fuel ribs of adjacent rows with respect to a direction of fuel flow across the interconnect; and
   the fuel channels provide a serpentine fuel flow path across the interconnect.
30. A fuel cell stack, comprising:
   the interconnect of claim 21;
   a first fuel cell located on the fuel ribs; and
   a second fuel cell located on the air ribs.
31. A method of operating the fuel cell stack of claim 30, comprising:
   flowing a fuel through the fuel channels, such that the at least one flow modulator disrupts the fuel boundary layer at the surface of the fuel channels; and
   flowing air through the air channels.
32. The method of claim 21, wherein the at least one flow modulator comprises protrusions that locally reduce a depth of the fuel channels.
33. The method of claim 32, wherein the fuel is forced upwards by the protrusions such that a velocity of the fuel over the protrusions is increased.
34. The method of claim 31, wherein the at least one flow modulator comprises depressions that locally increase a depth of the fuel channels.
35. The method of claim 34, wherein the fuel flows downwards into the depressions such that a velocity of the fuel over the depressions is decreased.
36. The method of claim 31, wherein:
   the at least one flow modulator comprises at least one transverse channel that extends across and fluidly connects the fuel channels;
   the at least one transverse channel separates the fuel ribs into rows of fuel rib segments; and
   the fuel flows through the at least one transverse channel in addition to flowing through the fuel channels.
37. The method of claim 36, wherein the at least one flow modulator further comprises protrusions or depressions located in the fuel channels.
38. The method of claim 36, wherein the at least one flow modulator further comprises at least one protrusion or depression located in the at least one transverse channel.
39. The method of claim 36, wherein the fuel flows in a serpentine fuel flow path across the interconnect.
40. The method of claim 31, wherein:
   the fuel comprises a hydrocarbon fuel or ammonia; and
   the at least one flow modulator disrupts the fuel boundary layer by generating local turbulence in the fuel flow.

## Claims

1. An interconnect for a fuel cell stack, the interconnect comprising:
fuel ribs disposed on a first side of the interconnect and a least partially defining fuel channels;
at least one flow modulator disposed in the fuel channels and configured to disrupt a fuel boundary layer at a surface of the fuel channels; and
air ribs disposed on an opposing second side of the interconnect and at least partially defining air channels.

2. The interconnect of claim 1, wherein the at least one flow modulator comprises protrusions that locally reduce a depth of the fuel channels by 10% to 60%.

3. The interconnect of claim 1, wherein the at least one flow modulator comprises depressions that locally increase a depth of the fuel channels by 10% to 60%.

4. The interconnect of claim 1, wherein the at least one flow modulator comprises at least one transverse channel that extends across and fluidly connects the fuel channels, and the at least one transverse channel separates the fuel ribs into rows of fuel rib segments.

5. The interconnect of claim 4, wherein the at least one flow modulator further comprises protrusions or depressions located in the fuel channels.

6. The interconnect of claim 4, wherein the at least one flow modulator further comprises at least one protrusion or depression located in the at least one transverse channel.

7. The interconnect of claim 4, wherein:
the fuel rib segments of each row are laterally offset with respect to the fuel ribs of adjacent rows with respect to a direction of fuel flow across the interconnect; and
the fuel channels provide a serpentine fuel flow path across the interconnect.

8. A fuel cell stack, comprising:
the interconnect of claim 1;
a first fuel cell located on the fuel ribs; and
a second fuel cell located on the air ribs.

9. A method of operating the fuel cell stack of claim 8, comprising:
flowing a fuel through the fuel channels, such that the at least one flow modulator disrupts the fuel boundary layer at the surface of the fuel channels; and
flowing air through the air channels.

10. The method of claim 9, wherein the at least one flow modulator comprises protrusions that locally reduce a depth of the fuel channels, and wherein the fuel is forced upwards by the protrusions such that a velocity of the fuel over the protrusions is increased.

11. The method of claim 9, wherein the at least one flow modulator comprises depressions that locally increase a depth of the fuel channels, and wherein the fuel flows downwards into the depressions such that a velocity of the fuel over the depressions is decreased.

12. The method of claim 9, wherein:
the at least one flow modulator comprises at least one transverse channel that extends across and fluidly connects the fuel channels;
the at least one transverse channel separates the fuel ribs into rows of fuel rib segments; and
the fuel flows through the at least one transverse channel in addition to flowing through the fuel channels.

13. The method of claim 12, wherein the at least one flow modulator further comprises at least one of protrusions or depressions located in the fuel channels, or at least one protrusion or depression located in the at least one transverse channel.

14. The method of claim 12, wherein the fuel flows in a serpentine fuel flow path across the interconnect.

15. The method of claim 9, wherein:
the fuel comprises a hydrocarbon fuel or ammonia; and
the at least one flow modulator disrupts the fuel boundary layer by generating local turbulence in the fuel flow.
